# EUROPEAN PATENT SPECIFICATION

(11) **EP 0 483 886 B1**
(45) Date of publication and mention of the grant of the patent: **08.03.1995**
(21) Application number: 91120078.0
(22) Date of filing: 27.12.1988
(51) Int. Cl.: B65B 7/28

(54) **Machine for making canned goods**
Vorrichtung zum Herstellen gefüllter Dosen
Dispositif pour la fabrication des boîtes remplies de produit

(30) Priority: 29.12.1987 JP 334108/87; 25.03.1988 JP 39326/88 U; 28.03.1988 JP 73658/88
(43) Date of publication of application: 06.05.1992
(62) Divisional of application: 88121687.3
(73) Proprietor: MITSUBISHI JUKOGYO KABUSHIKI KAISHA, Tokyo (JP)
(72) Inventor: Mihara, Hirokata, Suginami-ku, Tokyo (JP); Takagi,Koichi, c/o Nagoya Mach.Works of Mitsubishi, Nakamura-ku, Nagoya-shi, Aichi-ken (JP); Shimizu,Teruo, c/o Nagoya Mach.Works of Mitsubishi, Nakamura-ku, Nagoya-shi, Aichi-ken (JP); Tashiro, Katsunori, c/o Can Development Center of, Oyama-cho, Sunto-gun, Shizuoka-ken (JP); Takahashi, Hideo, c/o Can Development Center of, Oyama-cho, Sunto-gun, Shizuoka-ken (JP)
(74) Representative: Henkel, Feiler, Hänzel & Partner

(56) References cited:
- US-A- 2 840 963
- US-A- 3 848 396

## Description

### BACKGROUND OF THE INVENTION:

### Field of the Invention:

The present invention relates to a machine for making canned goods, aluminium cans, iron cans or the like being packed with beer, coffee, juice, etc.

### Description of the Prior Art:

A separator/feeder for can lids has been heretofore proposed, for instance, in Laid-Open Japanese Patent Specification No. 56-139242 (1981). Explaining now this separator/feeder with reference to Fig. 11 of said document, a separator 1 is rotationally driven by a rotary shaft 8 that is in turn driven via a gear train 6 from a drive shaft 5 of a can drum turlet 4. Can lids 7 would drop through a drop hole at the bottom of a hopper and are stacked in an inclined state with one edge of the stack placed on the top of a screw groove 9 of the separator 1, and as the separator 1 rotates, one can lid at the bottom of the stack is lowered as guided by the screw groove 9 of the separator 1 to be fed to the next step of a process.

In addition, various kinds of can lid feeders for use in a can seamer have been heretofore proposed, and explaining one example of the proposed can lid feeders with reference to Fig. 13 of said document, cans 102 filled with liquid in a filler 101 are fed into a seaming turlet 104 as conveyed by a can feed conveyor 103. Reference numeral 105 designates a can lid feeding turlet disposed contiguously to the seaming turlet 104, on the outer circumference thereof are formed guide grooves 105a similar to the guide grooves 104a for the cans 102 provided on the outer circumference of the seaming turlet 104, can lids 107 are made to fall onto the guide grooves 105a from a can lid feeding mechanism 106 at the above, and the lid 107 which has been made to fall, is fed onto the can 102 which has been conveyed by the can feed conveyor 103 and is about to be fed to the seaming turlet 104. Thereafter, the can 102 and the lid 107 sent into the seaming turlet 104 is subjected to seaming work by means of seaming rolls disposed around the seaming turlet 104 but not shown, and the thus completed packaging can 102' is sent through an outlet turlet 108 to the next step of a process.

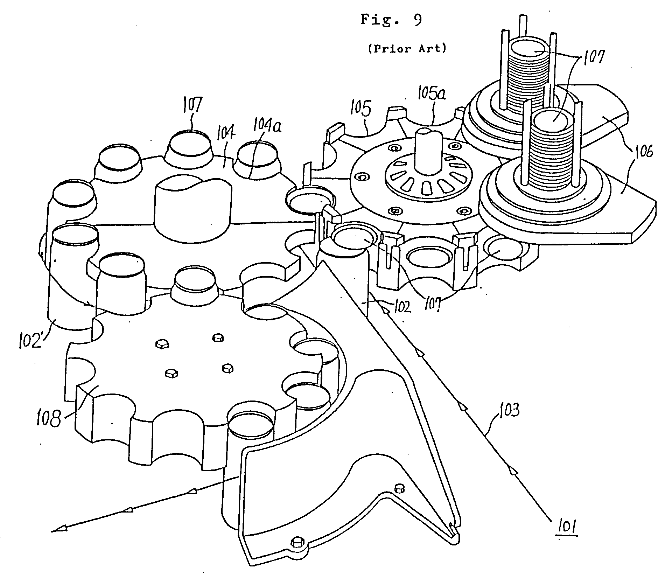

In the known apparatus shown in Fig. 9 of the attached drawings, since the cans 102 filled with liquid by a filler and being conveyed by the can feed conveyor 103 had can lids not yet placed thereon and moreover the cans 102 were being conveyed at a considerably high speed, liquid spill would arise on the can feed conveyor 103, and especially at the inlet of the seaming turlet 104 where the can lid 107 was going to be fed, due to the fact that the can 102 began to rotate as a result of transfer onto a lifter not shown under the condition where the can lid 107 had not yet perfectly put on the can 102, liquid spill at this location especially became an issue.

It is the object of the present invention to provide an improved can lid feeder in a can seamer, which can make canned goods from cans having different diameters.

This object is achieved by a machine comprising the features of claim 1.

The present invention will become more apparent by reference to the following description of a preferred embodiment of the invention taken in conjunction with the accompanying drawings.

### BRIEF DESCRIPTION OF THE DRAWINGS:

In the accompanying drawings:
Fig. 1 is a perspective view of a can lid feeder according to a preferred embodiment of the present invention;
Fig. 2 is a plan view of a can drum guide wheel in the same apparatus;
Fig. 3 is an enlarged plan view of the same;
Fig. 4 is a cross-section view taken along line A-A in Fig. 2;
Fig. 5 is a cross-section view taken along line B-B in Fig. 4;
Fig. 6 is a cross-section view taken along line C-C in Fig. 4;
Fig. 7 is a plan view of a can seamer showing an installed position of a can lid feeder according to a preferred embodiment of the present invention;
Fig. 8 is a side view of the same can seamer;
Fig. 9 is a perspective view showing an installed condition of a can lid feeder in the can seamer in the prior art.

### DESCRIPTION OF THE PREFERRED EMBODIMENTS:

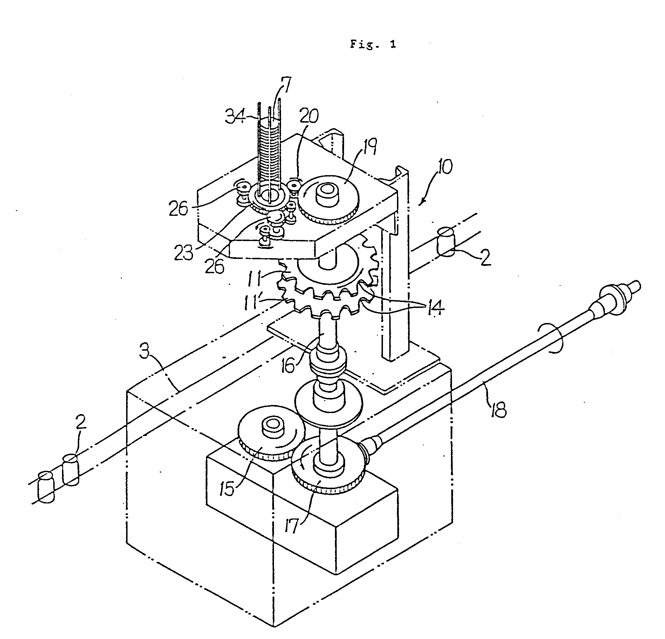

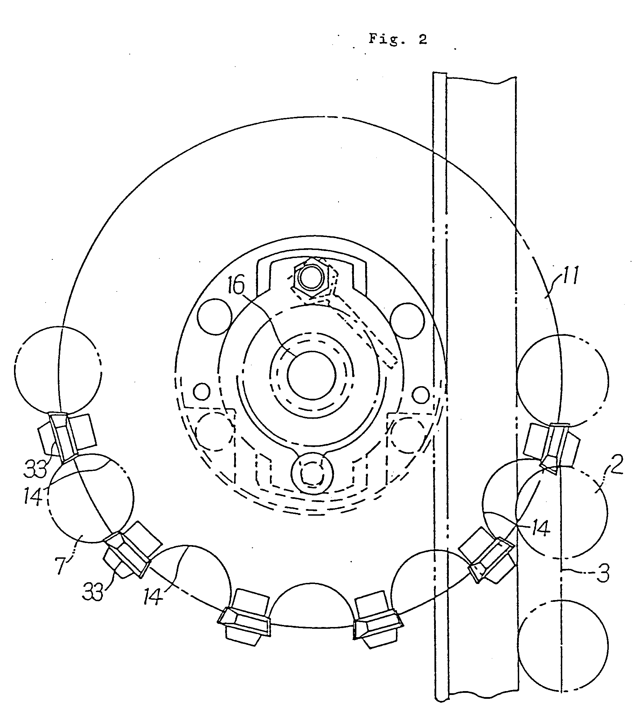

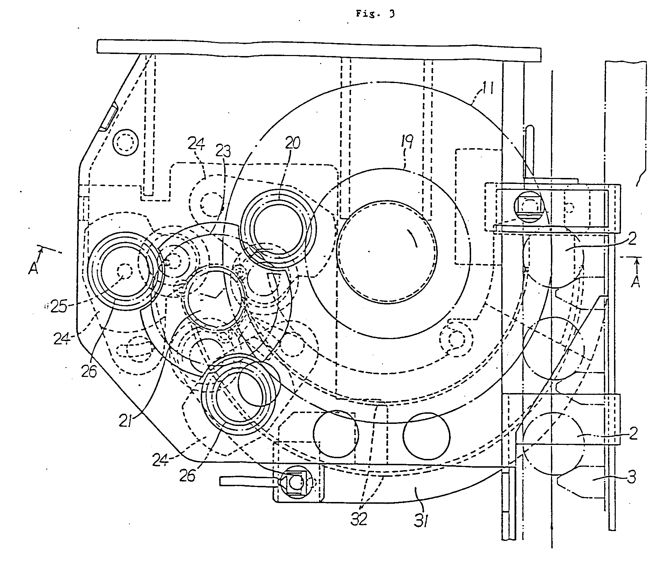

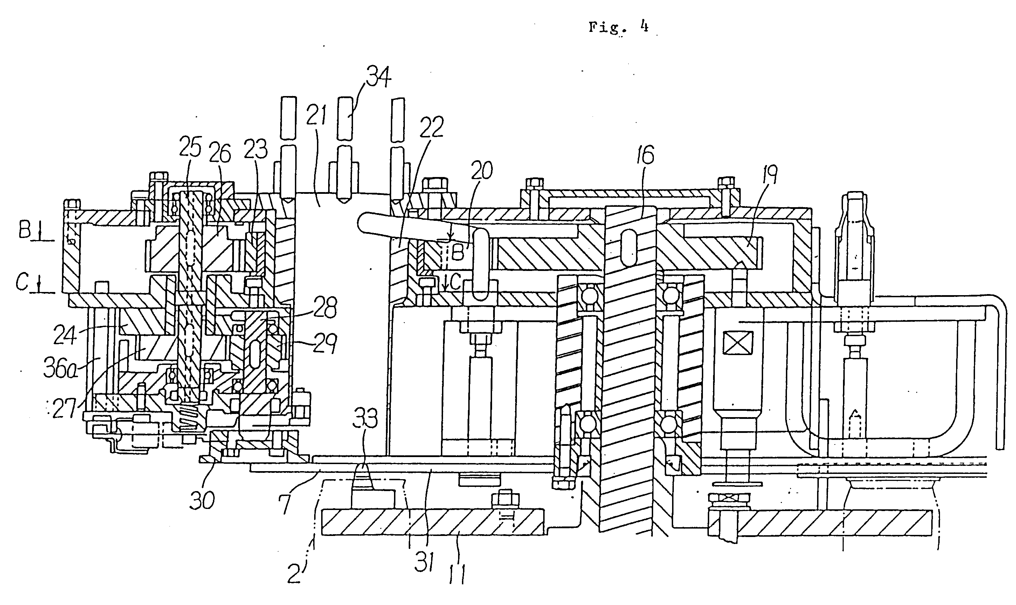

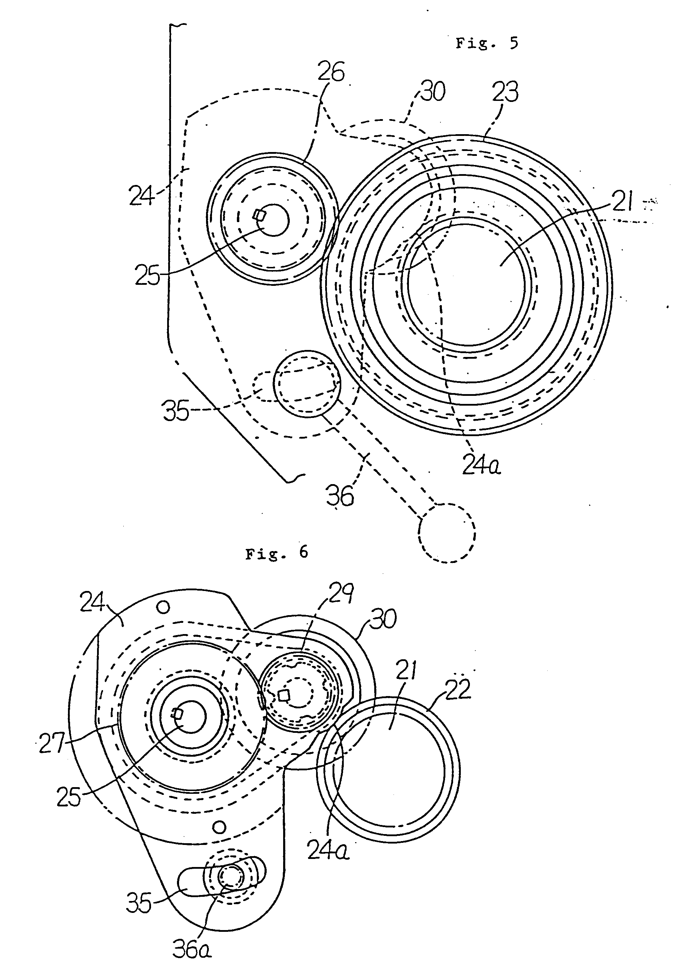

Now the present invention will be explained in connection to the illustrated embodiments. Figs. 1 to 8 show a preferred embodiment of the present invention. At first, explaining with respect to a can lid feeder 10 with reference to Figs. 1 to 6, Fig. 1 is a perspective view showing only a general mechanism of the can lid feeder 10, in which a can drum guide wheel assembly is composed of a pair of upper and lower guide star wheels 11 and 11', and as shown in Fig. 2 these guide star wheels 11 and 11' have guide grooves 14, within which cans 2 conveyed along a can feed conveyor are engaged at a contact point between the respective loci of their conveying centers. Reference numeral 15 designates a drive gear, which is meshed with a gear 17 for driving a shaft 16 to which the can drum guide star wheels 11 and 11' are fixedly secured. Reference numeral 18 designates a rotary shaft which rotates in the direction of the indicated arrow, said shaft being provided for the purpose of synchronizing the can lid feeder 10 with the rotation of a seamer not shown. Reference numeral 19 designates a gear fixed to the top of shaft 16, this gear 19 being adapted to drive a gear 23 surrounding a cylindrical body 22 having a drop hole 21 receiving can lids 7 therein so as to rotate about its own axis via an intermediate gear 20. Gear 23 is meshed with gear 26 fixed to shaft 25 which serves as a center of rotation of a swinging gear box 24, in addition on the same shaft 25 is fixed a gear 27, which is in turn meshed with a gear 29 fixed on a shaft 28 that is rotatably supported from the swinging gear box 24, and at the bottom of the same shaft 28 is fixedly secured a can lid separator 30. The can lid separator 30 serves to separate one can lid 7 at the bottom of a stack of can lids 7 which dropped through the drop hole 21 and stacked, and to feed it to grooves 32, 32 of a rail 31. Reference numeral 33 designates pushers mounted on the can drum guide star wheel 11 between the guide grooves 14 and 14, which hold the can lids 7 fed between the grooves 32, 32 of the rail 31 right above the guide grooves 14 and convey them along the grooves 32, 32 of the same rail in accordance with rotation of the can drum guide star wheel 11. Since the location where the can lid 7 reaches the top of the can 2 conveyed along the can feed conveyor 3 and having been engaged with the can drum guide star wheels 11 and 11' is the terminal end of the grooves 32, 32, the can lid 7 is disengaged from the grooves 32, 32 and drops on the can 2 positioned just thereunder, hence the can 2 is sent to the seamer with the can lid 7 kept placed on the can opening portion, and seaming work is effected.

The can lid separator 30 projects from a notched portion at the bottom of the cylindrical body 22 into the drop hole 21 for the can lids, the outer circumferential portion of the can lid at the lowest level is held at the top of a screw groove of the same separator 30, and as the separator 30 is rotated, the can lid is guided to the lower portion of the screw groove. However, in the case where the can lid diameter is changed in accordance with the change of the can drum diameter, the separator 30 must be moved in the radial direction in view of the necessity for adapting it to the outer circumferential edge of the can lid. In addition, in the event that the can lid diameter has been changed, it is necessary to replace a cylindrical body 22 having a drop hole diameter matched with the can lid diameter, but provision is made such that regardless of whether the diameter of the replaced cylindrical body has been enlarged or reduced, the outer circumferential edge of the separator 30 can be projected into the drop hole 21 by a predetermined dimension by merely bringing the side surface of the swinging gear box into contact with the outer circumferential surface of the cylindrical body 22. Explaining now the swinging action of the swinging gear box 24, this gear box 24 is able to swing about shaft 25. The swinging gear box 24 is provided with an elongated hole 35 that is arcuate about the axis of the shaft 25, and a positioning/clamping screw rod 36a associated with a clamp lever 36 is fitted in the elongated hole 35 to position the swinging gear box 24. If the positioning/clamping screw rod 36a is released by turning the clamp lever 36, the swinging gear box 24 can be manually made to swing arbitrarily as guided by the elongated hole 35 engaged with the screw rod 36a, and thereafter if the screw rod 36a is fastened by turning the clamp lever 36 in the opposite direction, the swinging gear box 24 can be fixed in position there.

Now the operation of the apparatus will be described. Cans 2 filled with liquid by a filler 1 are conveyed towards the can lid feeder 10 by the can feed conveyor 3.

On the other hand, the can drum guide star wheels 11 and 11' and the gear 19 are rotated via the gear 17 and the shaft 16 as driven by the drive gear 15 shown in Fig. 1. When the gear 19 rotates, the gears 20, 23 and 26 are rotated, furthermore the gears 27 and 29 are rotated via the shaft 25, thereby the shaft 28 is rotated, and it rotates the can lid separator 30.

Can lids 7 are fed from a hopper 34, then drop through the drop hole 21 of the cylindrical body 22 and are stacked. Then the can lid 7 at the lowermost level is taken out as a result of rotation of the can lid separator 30 and is fed into the grooves 32, 32 of the rail 31. The can lid 7 entered in the grooves 32, 32 is pushed by the pusher 33 mounted on the can drum guide star wheel 11 under the rail 31, hence it is conveyed as held at the position just above the guide groove 14 of the guide star wheel 11, and at the position where the grooves 32, 32 have terminated, it drops towards the can opening portion from the right above of the can 2 placed at the position where the can 2 has been engaged with the guide groove 14 of the can drum guide wheel 11 after having been conveyed by the can feed conveyor 3 as described above, and is placed on the can opening portion.

Subsequently, if the can drum diameter is changed, then the can lid diameter also must be changed, and so, it is necessary to replace a new cylindrical body 22 having a size matched with the changed can lid diameter. Prior to the replacement of the cylindrical body 22, the screw rod 36a is released by turning the clamp lever 36, and then the swinging gear box 24 is manually made to swing about the axis of the shaft 25 as guided by the elongated hole 35 up to the position where the separator 30 is disengaged from the cylindrical body 22. Next, after the cylindrical body 22 has been replaced by that having a predetermined diameter, the swinging gear box 24 is manually made to swing about the axis of the shaft 25 with the screw rod 36a of the clamp lever 36 guided along the elongated hole 35 up to the position where a side surface 24a of the swinging gear box 24 comes into contact with the outer circumferential surface of the cylindrical body, and thereafter, when the clamp lever 36 is turned in the opposite direction up to the original position, then the positioning/clamping screw rod 36a is fastened. Thus the swinging gear box 24 can be fixed in position by means of the clamp lever 36.

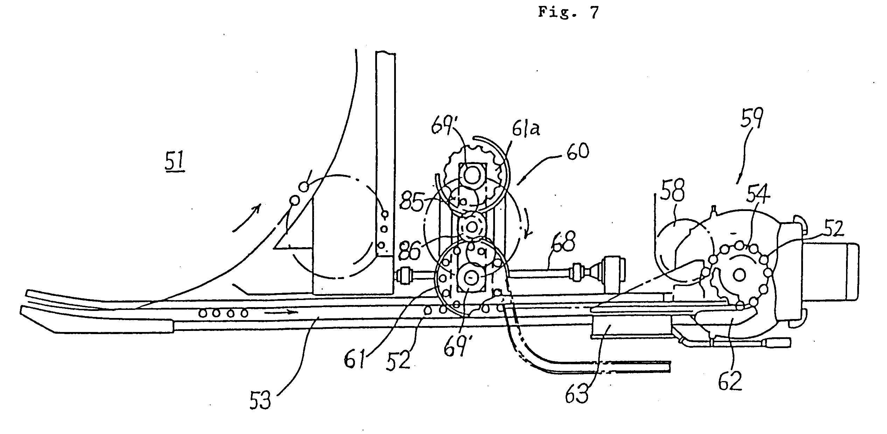

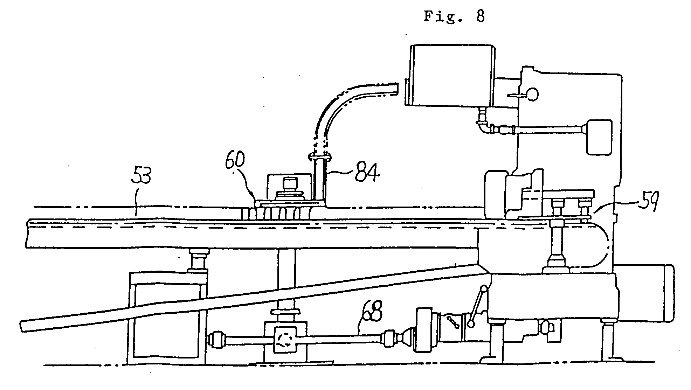

In Figures 7 and 8, reference numeral 51 designates a filler, numeral 52 designates cans, numeral 53 designates a can feed conveyor, numeral 54 designates a seaming turlet of a seamer 59, numeral 58 designates an outlet turlet, and these members are identical to the known ones in the prior art as shown in Fig. 9. Reference numeral 60 designates a can lid feeder which forms an essential aspect of the present invention, and Fig. 7 shows one preferred embodiment wherein the can drum guide star wheels are disposed at two locations 61 and 61a in a turlet form to be used alternately by switching. On the star wheel 61a being not used, can lids having a different size to be used next are preset or other preparations are effected. Reference numeral 62 in Fig. 7 designates an inlet guide.

It is to be noted that while the can lid feeder 60 is disposed in the midway of the can feed conveyor 53 between the filler 51 and the seamer 39 and is not disposed on a frame 63 of the seamer 59 in the embodiment shown in Fig. 7, this can lid feeder 60 could be disposed on the frame 63 of the seamer 59 by utilizing this frame 63. However, even in such a can lid feeder disposed on this frame 63, it is still the same that the can lid feeder is disposed in the midway of the can feed conveyor 53 between the filler 51 and the seamer 59. As the can lid feeder 60 in this preferred embodiment, for example, the can lid feeder explained above can be employed.

Now the operation of this preferred embodiment will be described. Cans 52 filled with liquid by filler 51 are conveyed towards the can lid feeder 60 by means of the can feed conveyor 53. On the other hand, in the can lid feeder 60 having the structure as described previously with reference to Figs. 1 to 6, can lids 7 are fed from the hopper 34, and drop through the drop hole 21 in the cylindrical body 22 to be stacked. The can lid 7 at the bottom of the stack is taken out by the can lid separator 30 being rotated, and is fed into the grooves 32, 32 of the rail 31. The can lid 7 entered in the grooves 32, 32 is pushed by the pusher 33 mounted on the can drum guide star wheel 11 under the rail 31 to be conveyed as held at the position right above the guide groove 14 of the same guide star wheel 11, and at the location where the grooves 32, 32 are terminated it drops towards the can opening portion of the can 2 placed at the position where the can 2 was conveyed by the can feed conveyor 3 and has been engaged with the guide groove 14 of the can drum guide star wheel 11 from the right above of the can 2 to be placed on the can opening portion. Is is to be noted that the grooves 32 are inclined downwards towards the terminal end portion and the drop distance in the case of the can lid dropping onto the can is reduced so that the can lid can drop accurately onto the can.

The can 52 having the can lid placed on the can opening in the above-described manner, is further conveyed by the can feed conveyor 53 towards the can seamer 59 to be fed to the seaming turlet 54, and then it is subjected to seaming work by means of seaming rolls not shown.

## Claims

1. A machine for making canned goods, comprising:
a filler (51) for filling can bodies (2, 52) with goods to be packed therein;
a seaming turret (54), disposed downstream of said filler (51) in the machine, for securing can lids (7) to said can bodies (2, 52) that have been filled by said filler (51);
a feed conveyor (53) extending between said filler (51) and said seaming turret (54) for conveying said can bodies (2, 52) filled by said filler (51) toward said seaming turret (54); and
a can lid feeder (60), disposed midway of said feed conveyor (53) between said filler (51) and said seaming turret (54), for placing said can lids (7) on said can bodies (2, 52) over openings thereof after the can bodies have been filled by said filler (51) and prior to said can bodies (2, 52) reaching said seaming turret (54);
characterized in that
said can lid feeder (60) includes first and second can drum guide star wheels (61, 61a) which are rotatably supported on respective axes of rotation spaced from one another, and
said first and second can drum guide star wheels (61, 61a) are adapted be brought in a first position at which said first star wheel (61) is located alongside said feed conveyor (53) with said second star wheel (61a) disposed away from said feed conveyor (53) and in a second position at which said second star wheel (61a) is located alongside said feed conveyor (53) with said first star wheel (61) disposed away from said feed conveyor (53).

## Patentansprüche

1. Maschine zur Herstellung von in Dosen verpacktem Gut bzw. von gefüllten Dosen, umfassend:
eine Füllstation (51) zum Befüllen von Dosenkörpern (2, 52) mit darin zu verpackendem Gut,
einem der Füllstation (51) in der Maschine stromab (nachgeschaltet) angeordneten Verschließ-Drehkopf (54) zum Befestigen von Dosendeckeln (7) an den durch die Füllstation (51) befüllten Dosenkörpern (2, 52),
einen zwischen der Füllstation (51) und dem Verschließ-Drehkopf (54) verlaufenden Zuführförderer (53) zum Fördern der in der Füllstation (51) befüllten Dosenkörper (2, 52) zum Verschließ-Drehkopf (54) und
einen im Mittelbereich des Zuführförderers (53) zwischen der Füllstation (51) und dem Verschließ-Drehkopf (54) angeordneten Dosendeckelzuführer (60) zum Aufsetzen der Dosendeckel (7) auf die Dosenkörper (2, 52) über Öffnungen derselben, nachdem die Dosenkörper in der Füllstation (51) befüllt worden sind und bevor die Dosenkörper (2, 52) den Verschließ-Drehkopf (54) erreichen,
dadurch gekennzeichnet, daß
der Dosendeckelzuführer (60) erste und zweite DosenkörperLeitsternräder (61, 61a) aufweist, die auf jeweiligen, voneinander beabstandeten Drehachsen drehbar gelagert sind, und
die ersten und zweiten Dosenkörper-Leitsternräder (61, 61a) in eine erste Stellung, in welcher das erste Sternrad (61) längs des Zuführförderers (53) angeordnet ist, während das zweite Sternrad (61a) vom Zuführförderer (53) entfernt liegt, und in eine zweite Stellung bringbar sind, in welcher das zweite Sternrad (61a) längs des Zuführförderers (53) angeordnet ist, während das erste Sternrad (61) vom Zuführförderer (53) entfernt liegt.

## Revendications

1. Une machine pour la fabrication de boîtes remplies de produit, comportant :
un organe de remplissage (51) pour remplir des corps de boîtes (2,52) du produit destiné à être contenu dans ceux-ci ;
un tourniquet de sertissage (54), disposé en aval dudit organe de remplissage (51) de la machine, pour assujettir des couvercles de boîtes (7) auxdits corps de boîtes (2,52) qui ont été remplis par ledit organe de remplissage (51) ;
un transporteur d'alimentation (53) s'étendant entre ledit organe de remplissage (51) et ledit tourniquet de sertissage (54) pour transporter lesdits corps de boîtes (2,52) remplis par ledit organe de remplissage (51) vers ledit tourniquet de sertissage (54) ; et
un dispositif (60) d'alimentation en couvercles de boîtes, disposé en un emplacement intermédiaire dudit transporteur d'alimentation (53), entre ledit organe de remplissage (51) et ledit tourniquet de sertissage (54), pour placer lesdits couvercles de boîtes (7) sur lesdits corps de boîtes (2,52) par dessus les ouvertures de ceux-ci après que les corps de boîtes ont été remplis par ledit organe de remplissage (51) et avant que lesdits corps de boîtes (2,52) atteignent ledit tourniquet de sertissage (54) ;
caractérisée en ce que
ledit dispositif (60) d'alimentation en couvercles de boîtes porte une première et une seconde roues étoile (61,61a) de guidage des corps de boîtes, qui sont supportées de manière tournante sur des axes respectifs de rotation espacés l'un de l'autre, et
lesdites première et seconde roues étoile (61,61a) de guidage des corps de boîtes sont agencées pour être amenées dans une première position, pour laquelle ladite première roue étoile (61) est située le long dudit transporteur d'alimentation (53) tandis que ladite seconde roue étoile (61a) est située à distance dudit transporteur d'alimentation (53), et dans une seconde position, pour laquelle ladite seconde roue étoile (61a) est située le long dudit transporteur d'alimentation (53) tandis que ladite première roue étoile (61) est située à distance dudit transporteur d'alimentation (53).
